# EUROPEAN PATENT APPLICATION

(11) **EP 4 550 640 A1**
(43) Date of publication of application: **07.05.2025**
(21) Application number: 24208476.2
(22) Date of filing: 23.10.2024
(51) Int. Cl.: H02K 9/22, H02K 1/18, H02K 5/173

(54) **ELECTRIC TOOL INCLUDING AN OUTER-ROTOR MOTOR**

(30) Priority: 31.10.2023 US 202363594630 P; 17.10.2024 US 202418918522
(71) Applicant: Black & Decker, Inc., New Britain, CT 06053 (US)
(72) Inventor: CAO, Pengcheng, Suzhou (CN); LU, Changxing, Suzhou (CN); CHEN, Zhizhong, Suzhou 21286 (CN); SHEN, Pengcheng, Suzhou (CN); LIU, Fulong, Suzhou 21286 (CN); GU, Yeli, Suzhou (CN)
(74) Representative: SBD IPAdmin

(57) **Abstract**

A tool such as a string trimmer having an outer-rotor motor is disclosed. The tool includes a motor housing configured to align a rotor assembly, a stator assembly, a bearing support structure that fully pilots and supports the rotor assembly on one side of the motor housing, and a heat sink that fully supports the stator assembly on another side of the motor housing. The heat sink seals the motor housing from debris and is configured to absorb heat generated by the outer-rotor motor without added airflow from a fan or from openings. The disclosed outer-rotor motor requires no adhesives to hold magnets, thereby simplifying fabrication and improving magnet performance.

## Description

The present utility patent application claims the benefit of US Provisional Patent Application No 63/594,630 filed October 31, 2023, which is incorporated herein by reference in its entirety.

The present disclosure relates to a power tool and more specifically, to an electric outdoor apparatus having an outer-rotor motor for operation.

### BACKGROUND

An electric motor includes a stator and a movable rotor. In an outer-rotor motor, the movable rotor, which includes a plurality of permanent magnets, surrounds the fixed stator, which includes a plurality of windings. The plurality of windings may be energized electronically in a sequence (i.e., electronically commutated) to induce magnetic poles in the stator, which interact with the fixed magnetic poles of the permanent magnets to turn the rotor. The electronic commutation may be highly efficient, which lowers energy consumption and heating as compared to mechanically commutated motors. The placement of the plurality of permanent magnets at a diameter outside the stator windings can allow for more permanent magnets to be used, which can create more torque than a comparable inner rotor motor, which may have advantages for a power tool. For example, a torque created by an outer-rotor motor may be sufficient to turn a shaft of a power tool directly, without the need for a transmission.

### SUMMARY

It may be desirable to use an outer-rotor motor for a power tool. These electric motors, however, may be more complicated and expensive than other electric motors, which may have prevented their use in some power tools, such as a string trimmer. Here, a string trimmer is disclosed which includes the advantages of an outer-rotor motor while balancing the need for efficiency in cost and complexity.

In some aspects, the techniques described herein relate to a tool comprising: an outer-rotor motor including a rotor assembly configured to rotate relative to a stator assembly, the rotor assembly coupled to a shaft. The motor housing may include: a cylindrical body forming an interior chamber configured to contain the outer-rotor motor and having an open end; and a bearing support structure extending inwardly from the cylindrical body to form a bearing pocket configured to support and position a bearing-pair, the bearing-pair being mounted on the shaft of the outer-rotor motor so that the rotor assembly is positioned inside the interior chamber. The tool may comprise a heat sink attached to the open end of the motor housing opposite the bearing support structure, the heat sink configured to support and position the stator assembly inside the interior chamber and within the rotor assembly and substantially absorb heat generated by the stator assembly.

In some aspects, the techniques described herein relate to a tool, wherein the heat sink has a plate-like shape that includes an interior surface and an exterior surface, the exterior surface opposite to the interior surface.

In some aspects, the techniques described herein relate to a tool, wherein the interior surface includes: a raised ring that mates with an opening in the motor housing to position the heat sink and seal the interior chamber when the heat sink is attached to the motor housing; and a mounting post extending into the interior chamber of the motor housing when the heat sink is attached to the motor housing.

In some aspects, the techniques described herein relate to a tool, wherein a center bore of the stator assembly is press-fit onto the mounting post of the heat sink.

In some aspects, the techniques described herein relate to a tool, wherein the exterior surface includes: fins configured to dissipate the heat absorbed by the heat sink to an environment, the environment being outside the interior chamber; and no openings to the interior chamber.

In some aspects, the techniques described herein relate to a tool, wherein the heat sink has a cup-like shape that includes an interior side and an exterior side, wherein: the interior side partially defines the interior chamber when the heat sink is attached to the motor housing; and the exterior side faces an environment when the heat sink is attached to the motor housing, the environment being outside the interior chamber.

In some aspects, the techniques described herein relate to a tool, wherein: the interior side includes a mounting post; and the mounting post of the heat sink and the stator assembly of the outer-rotor motor are press-fit together.

In some aspects, the techniques described herein relate to a tool, wherein the exterior side includes: fins configured to dissipate the heat absorbed by the heat sink to the environment; and no openings to the interior chamber.

In some aspects, the techniques described herein relate to a tool, wherein the bearing-pair includes: a first ball-bearing including a first inner diameter and a first outer diameter; and a second ball-bearing including a second inner diameter and a second outer diameter, wherein the first inner diameter is equal to the second inner diameter and the first outer diameter is equal to the second outer diameter.

In some aspects, the techniques described herein relate to a tool, wherein: the first ball-bearing and the second ball-bearing are arranged in a contiguous stack with the first outer diameter of the first ball-bearing and the second outer diameter of the second ball-bearing being in contact with the bearing support structure of the motor housing; and the shaft extends through the first inner diameter of the first ball-bearing and the second inner diameter of the second ball-bearing.

In some aspects, the techniques described herein relate to a tool, wherein the rotor assembly includes: a plurality of permanent magnets; a magnet base including teeth configured to space the plurality of permanent magnets equally around a perimeter of the magnet base, the teeth including wedge surfaces facing the plurality of permanent magnets; and an outer ring configured to mate with the magnet base, wherein: the plurality of permanent magnets are pushed against the wedge surfaces of the teeth by the outer ring to hold the plurality of permanent magnets in place when the outer ring is mated with the magnet base.

In some aspects, the techniques described herein relate to a tool, wherein the plurality of permanent magnets are held without an adhesive.

In some aspects, the techniques described herein relate to a tool, wherein the magnet base further includes a step and the plurality of permanent magnets are pushed against the step by the outer ring when the outer ring is mated with the magnet base.

In some aspects, the techniques described herein relate to a tool, wherein the magnet base includes raised latches that mate with notches in the outer ring to prevent the outer ring from rotating when the outer ring is mated with the magnet base.

In some aspects, the techniques described herein relate to a tool, wherein the rotor assembly includes: a plurality of permanent magnets; a molded insert including: a plurality of flexible ribs spaced equally around a perimeter of the molded insert and configured to hold the plurality of permanent magnets; and a magnet base including: a cup-like shape configured to receive the molded insert; and a plurality of tabs configured to be folded over each of the plurality of permanent magnets to hold each of the plurality of permanent magnets in the magnet base and in between adjacent flexible ribs of the molded insert.

In some aspects, the techniques described herein relate to a tool, wherein the molded insert includes a plurality of torque retaining features configured to mate with the magnet base to prevent the molded insert from slipping when torque is applied to the magnet base.

In some aspects, the techniques described herein relate to a tool, wherein the tool further comprises a boom receiver, and the motor housing further defines an opening formed between the interior chamber and the boom receiver, the boom receiver configured to: mate with a boom section of a string trimmer; and contain electrical wiring from an electrical power supply.

In some aspects, the techniques described herein relate to a tool, wherein the electrical power supply includes a battery pack, the battery pack electrically coupled to the stator assembly by the electrical wiring.

In some aspects, the techniques described herein relate to a tool, wherein the stator assembly includes: a stator core that includes a plurality of stator teeth that are equally spaced around a center bore and that are directed radially outward from the center bore; a plurality of stator windings, each stator winding including an electrical wire wrapped around a respective stator tooth and configured to be electrically energized by a power supply to generate a magnetic field.

In some aspects, the techniques described herein relate to a tool, wherein the center bore is press-fit to a mounting post of the heat sink.

In some aspects, the techniques described herein relate to a tool, wherein the stator core includes a plurality of laminated layers of a ferrous metal.

In some aspects, the techniques described herein relate to a method for assembling a tool, the method including: positioning a bearing-pair into a bearing support structure of a motor housing; fitting a shaft into the bearing-pair so that a first end of the shaft is in an interior chamber defined by the motor housing; building a rotor assembly by: positioning a plurality of permanent magnets into a magnet base; attaching the plurality of permanent magnets to the magnet base mechanically without an adhesive; and press-fitting an opening in the magnet base onto the first end of the shaft; press-fitting a stator assembly onto a mounting post of a heat sink; and attaching the heat sink to the motor housing so that the stator assembly is within the rotor assembly.

In some aspects, the techniques described herein relate to a method, wherein attaching the plurality of permanent magnets to the magnet base includes: positioning the plurality of permanent magnets between teeth of the magnet base, the teeth spaced equally around a perimeter of the magnet base; and mating an outer ring with the magnet base to push the plurality of permanent magnets against wedge surfaces of the teeth to hold the plurality of permanent magnets in the magnet base.

In some aspects, the techniques described herein relate to a method, wherein attaching the plurality of permanent magnets to the magnet base includes: positioning a molded insert inside the magnet base, the molded insert including flexible ribs spaced equally around a perimeter of the magnet base; positioning the plurality of permanent magnets between the flexible ribs of the molded insert; and folding a plurality of tabs of the magnet base over each of the plurality of permanent magnets to hold each of the plurality of permanent magnets in between adjacent flexible ribs of the molded insert.

In some aspects, the techniques described herein relate to an outer-rotor motor for a tool, including: a rotor assembly configured to rotate relative to a stator assembly, the rotor assembly coupled to a shaft; a motor housing defining: an interior chamber configured to contain the outer-rotor motor; and a bearing support structure configured to support and position a bearing-pair, the bearing-pair supporting the shaft of the outer-rotor motor so that the rotor assembly is positioned inside the interior chamber; and a heat sink attached to the motor housing, the heat sink configured to: support and position the stator assembly inside the interior chamber and within the rotor assembly; absorb heat generated by the stator assembly; and seal the interior chamber to protect the outer-rotor motor.

In some aspects, the techniques described herein relate to an outer-rotor motor for the tool, wherein the rotor assembly includes: a plurality of permanent magnets; a magnet base including a plurality of teeth configured to space the plurality of permanent magnets equally around a perimeter of the magnet base, the plurality of teeth including wedge surfaces facing the plurality of permanent magnets; and an outer ring configured to mate with the magnet base, wherein: the plurality of permanent magnets are pushed against the wedge surfaces of the plurality of teeth by the outer ring to hold the plurality of permanent magnets in place without an adhesive when the outer ring is mated with the magnet base.

In some aspects, the techniques described herein relate to an outer-rotor motor for the tool, wherein the rotor assembly includes: a plurality of permanent magnets; a molded insert including: a plurality of flexible ribs spaced equally around a perimeter of the molded insert and configured to hold the plurality of permanent magnets; and a magnet base including: a cup-like shape configured to receive the molded insert; and a plurality of tabs configured to be folded over each of the plurality of permanent magnets to hold the plurality of permanent magnets in the magnet base and in between flexible ribs of the molded insert.

According to an aspect of this disclosure, a tool is provided including an outer-rotor motor including a rotor assembly configured to rotate relative to a stator assembly, the rotor assembly coupled to a shaft; a motor housing including: a cylindrical body forming an interior chamber configured to contain the outer-rotor motor and having an open end; and a bearing support structure extending inwardly from the cylindrical body to form a bearing pocket configured to support and position a bearing-pair, the bearing-pair being mounted on the shaft of the outer-rotor motor so that the rotor assembly is positioned inside the interior chamber; and a heat sink attached to the open end of the motor housing opposite the bearing support structure. The heat sink may be configured to: support and position the stator assembly inside the interior chamber and within the rotor assembly; absorb heat generated by the stator assembly; and seal the interior chamber to protect the outer-rotor motor.

In some aspects, the heat sink has a plate-like shape that includes an interior surface and an exterior surface, the exterior surface opposite to the interior surface.

In some aspects, the interior surface includes: a raised ring that mates with an opening in the motor housing to position the heat sink and seal the interior chamber when the heat sink is attached to the motor housing; and a mounting post extending into the interior chamber of the motor housing when the heat sink is attached to the motor housing.

In some aspects, a center bore of the stator assembly is press-fit onto the mounting post of the heat sink.

In some aspects, the exterior surface includes: fins configured to dissipate the heat absorbed by the heat sink to an environment, the environment being outside the interior chamber; and no openings to the interior chamber.

In some aspects, the bearing-pair includes: a first ball-bearing including a first inner diameter and a first outer diameter; and a second ball-bearing including a second inner diameter and a second outer diameter, wherein the first inner diameter is equal to the second inner diameter and the first outer diameter is equal to the second outer diameter.

In some aspects, the first ball-bearing and the second ball-bearing are arranged in a contiguous stack with the first outer diameter of the first ball-bearing and the second outer diameter of the second ball-bearing being in contact with the bearing support structure of the motor housing; and the shaft extends through the first inner diameter of the first ball-bearing and the second inner diameter of the second ball-bearing.

In some aspects, the tool further comprises a boom receiver, and the motor housing further defines an opening formed between the interior chamber and the boom receiver, the boom receiver configured to: mate with a boom section of a string trimmer; and contain electrical wiring from an electrical power supply.

In some aspects, the stator assembly includes: a stator core that includes a plurality of stator teeth that are equally spaced around a center bore and that are directed radially outward from the center bore; a plurality of stator windings, each stator winding including an electrical wire wrapped around a respective stator tooth and configured to be electrically energized by a power supply to generate a magnetic field.

In some aspects, the center bore is press-fit to a mounting post of the heat sink.

According to an aspect of this disclosure, a tool is provided comprising: an outer-rotor motor including a rotor assembly configured to rotate relative to a stator assembly, the rotor assembly coupled to a shaft; a motor housing including a bearing support structure extending inwardly from the cylindrical body to form a bearing pocket configured to support and position a bearing-pair, the bearing-pair being mounted on the shaft of the outer-rotor motor so that the rotor assembly is positioned inside the interior chamber; and a heat sink attached to the motor housing to absorb heat generated by the stator assembly. In some aspects, the heat sink includes: a plate portion located on a side of the outer-motor opposite the bearing support structure, the plate portion being configured to support and position the stator assembly within the rotor assembly; and a substantially cylindrical portion extending from the plate portion around at least a portion of the rotor assembly and coupled to the motor housing, wherein the substantially cylindrical portion and the motor housing cooperatively form an interior chamber that contains the outer-rotor motor.

In some aspects, the heat sink comprises a mounting post extending from the plate portion into the stator assembly, wherein a center bore of the stator assembly is press-fit onto the mounting post.

In some aspects, the plate portion of the heat sink comprises: fins configured to dissipate the heat absorbed by the heat sink to an environment, the environment being outside the interior chamber; and no openings to the interior chamber.

In some aspects, the bearing-pair includes at least two bearings in a stacked position and having substantially the same diameter, wherein the bearing pocket is elongated around the shaft to support the at least two bearings.

According to an aspect of this disclosure, an outer-rotor motor is provided comprising: a stator assembly including a plurality of stator windings; and a rotor assembly including a plurality of permanent magnets mounted around the stator assembly in permanent magnetic interaction with the plurality of stator windings. In some aspects, the rotor assembly comprises: a magnet base supporting the plurality of permanent magnets and including a plurality of teeth configured to space the plurality of permanent magnets equally around a perimeter of the magnet base; and an outer ring configured to mate with the magnet base and located around the plurality of permanent magnets.

In some aspects, the plurality of teeth is at least partially received in a plurality of gaps formed circumferentially between the plurality of permanent magnets.

In some aspects, the plurality of teeth includes wedge surfaces engaging the plurality of permanent magnets, and wherein the outer ring biases the plurality of permanent magnets against the wedge surfaces of the teeth to hold the plurality of permanent magnets in place when the outer ring is mated with the magnet base.

In some aspects, the plurality of permanent magnets is held without an adhesive.

In some aspects, the magnet base further includes an annular step projecting therefrom radially-inwardly of the plurality of permanent magnets, and the plurality of permanent magnets is pressed against the annular step by the outer ring when the outer ring is mated with the magnet base.

In some aspects, the magnet base includes raised latches that mate with notches in the outer ring to rotationally fix the magnet base relative to the outer ring.

According to an aspect of this disclosure, an outer-rotor motor is provided comprising: a stator assembly including a plurality of stator windings; and a rotor assembly including a plurality of permanent magnets mounted around the stator assembly in permanent magnetic interaction with the plurality of stator windings. In some aspects, the rotor assembly comprises: a magnet base supporting the plurality of permanent magnets and including a plurality of tab extending from an end of the magnet base and folded into engagement with the plurality of permanent magnets to axially constrain the plurality of permanent magnets within the magnet base; and a molded insert formed at least partially on an inner surface of the magnet base and forming a plurality of flexible ribs configured to hold the plurality of permanent magnets against the magnet base.

In some aspects, the molded insert comprises a plurality of ribs extended along the inner surface of the magnet base between the plurality of permanent magnets to hold the plurality of permanent magnets against the magnet base.

In some aspects, the molded insert includes a plurality of torque retaining features configured to mate with the magnet base to prevent the molded insert from slipping when torque is applied to the magnet base.

In any of the aspects mentioned in this section, the tool may be a poled tool such as a string trimmer or brush cutter. The motor of any of the aspects in this section may be implemented in any suitable power tool.

The foregoing illustrative summary, as well as other exemplary objectives and/or advantages of the disclosure, and the manner in which the same are accomplished, are further explained within the following detailed description and its accompanying drawings.

### BRIEF DESCRIPTION OF THE DRAWINGS

FIG. 1 is a perspective view of an electric outdoor apparatus, in this example a string trimmer, according to a possible implementation of the present disclosure.
FIG. 2 is a side, cross-sectional view of a head portion of a string trimmer according to a possible implementation of the present disclosure.
FIG. 3 is a side, cross-sectional view of a motor housing according to a possible implementation of the present disclosure.
FIG. 4A is a perspective view of an exterior surface of a heat sink according to a first possible implementation of the present disclosure.
FIG. 4B is a perspective view of an interior surface of a heat sink according to the first possible implementation of the present disclosure.
FIG. 5 is a perspective view of an interior side of a heat sink according to a second possible implementation of the present disclosure.
FIG. 6 is a side view of a head portion of a string trimmer according to a possible implementation of the present disclosure.
FIG. 7A is a perspective view of a rotor assembly according to a first possible implementation of the present disclosure.
FIG. 7B is a perspective view of the magnet base for the rotor assembly of FIG. 7A.
FIG. 7C is a perspective view of the outer ring for the rotor assembly of FIG. 7A.
FIG. 8A is a perspective view of a rotor assembly according to a second possible implementation of the present disclosure.
FIG. 8B is a perspective view of a magnet base for the rotor assembly of FIG. 8A.
FIG. 8C is a perspective view of a molded insert for the rotor assembly of FIG. 8A.
FIGS. 9A and 9B is a perspective cutaway view illustrating a stator assembly before and after being mechanically coupled to a mounting post of a heat sink according a possible implementation of the present disclosure.
FIG. 10 is a flowchart of a method for assembling a string trimmer according to a possible implementation of the present disclosure.
FIG. 11 is an exploded, perspective view of string trimmer including an outer-rotor motor according to a possible implementation of the present disclosure.
FIG. 12 is a side cross-sectional view of a head portion of a string trimmer illustrating dimensions of an outer-rotor motor according to a possible implementation of the present disclosure.
FIG. 13 is a graph illustrating speed versus torque of an outer-rotor motor according to a possible implementation of the present disclosure.
FIG. 14 is a graph illustrating current versus torque for an outer-rotor motor according to a possible implementation of the present disclosure.
FIG. 15 is a graph illustrating power verses torque for an outer-rotor motor according to a possible implementation of the present disclosure.

The components in the drawings are not necessarily to scale relative to each other. Like reference numerals designate corresponding parts throughout the several views.

### DETAILED DESCRIPTION

A string trimmer is a power tool for cutting vegetation using a monofilament line. The monofilament line can be fed and held by a spindle rotated by a shaft coupled to an electric motor. An outer-rotor electric motor may be desired for this application because of its advantages (e.g., efficiency). In particular, the outer-rotor motor may provide a torque and turn rate (i.e., RPM) suitable for directly driving the shaft of a string trimmer without the need for additional gearing (i.e., transmission).

The use of the outer-rotor motor in a string trimmer, however, may face a few technical problems. A first technical problem may be related to positioning and holding the permanent magnets of the outer rotor. Using epoxy and/or molding for this purpose can reduce the flux of the permanent magnets, which can reduce the performance (e.g., torque) of the motor. A second technical problem may be related to maintaining spatial relationships between the components (e.g., stator and rotor) of the outer-rotor motor, especially during the harsh use of a string trimmer. Complicated positioning schemes may not be practical for a high rate of fabrication. A third technical problem may be related to the heat generated by the motor. Using a fan and/or openings in a housing for cooling can degrade (e.g., become clogged with vegetation) during use.

A string trimmer is disclosed that addresses at least these technical problems. The string trimmer includes an outer rotor motor assembly that can remove heat from the motor, seal the motor from the environment, and support and position the components (e.g., permanent magnets) of the electric motor. In a possible implementation, the outer-rotor motor of the string trimmer may further include features to hold the permanent magnets of the rotor in place without glue or molding, which may help maximize the performance (e.g., magnetic flux) of the permanent magnets. The outer-rotor motor assembly of the disclosed string trimmer may have the technical effect of reducing the complexity and/or increasing the durability of the string trimmer.

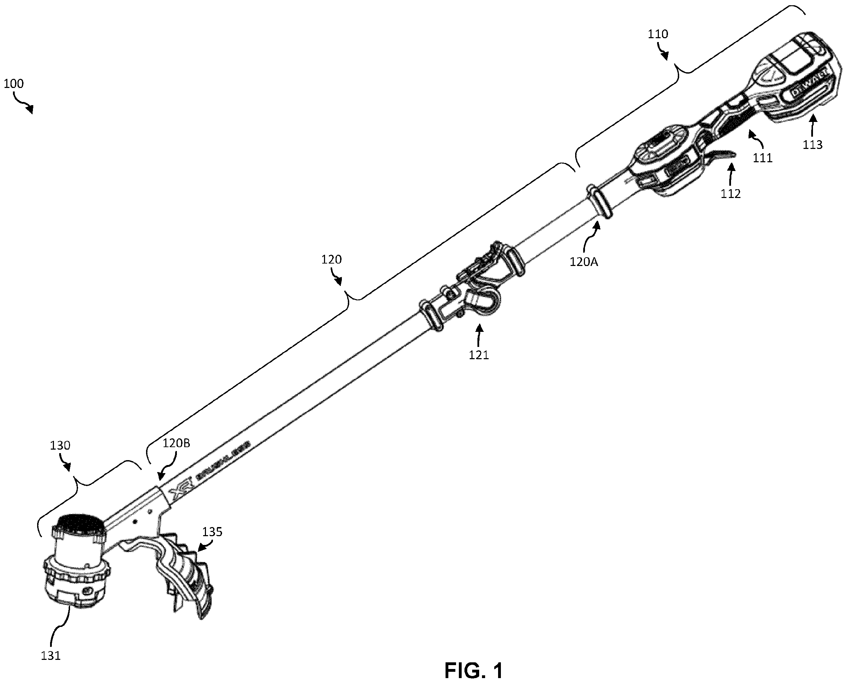

FIG. 1 is a perspective view of a string trimmer according to a possible implementation of the present disclosure. The string trimmer 100 includes a handle portion 110 that is coupled to a head portion 130 via a boom portion 120, which is positioned between the handle portion 110 and the head portion 130.

The handle portion 110 can be configured to interface with a user. In a possible implementation, the handle portion 110 may include a grip 111 for a user to hold during operation. The handle portion 110 may further include a control switch 112 that a user may actuate to control (e.g., ON/OFF) and/or adjust operation (e.g., speed) of the string trimmer 100. The handle portion 110 may further include an electrical power supply 113 for the string trimmer 100. In a possible implementation, the electrical power supply includes a battery pack. The battery pack may be rechargeable, and in a possible implementation, the battery pack is removable so that it can be replaced and/or recharged.

The boom portion 120 is attached, at a first end 120A, to the handle portion 110 to extend the reach of the string trimmer 100. The boom portion 120 may be tubular and can serve as a conduit for electrical wiring between the electrical power supply 113 (i.e., battery pack) and the head portion 130. The boom portion 120 may further a hinge mechanism 121 so that a reach of the string trimmer may be adjusted (e.g., for storage, for a user).

The head portion 130 of the string trimmer 100 is attached to a second end 120B of the boom portion 120. The head portion 130 includes an electric motor that is configured to rotate a cutter for cutting material. The head portion 130 may further include a shield 135 configured to block the cut material from reaching a user after being thrown by the cutter.

As shown, the cutter may be implemented as a spindle 131 that is turned by a shaft of an electric motor. The shaft may rotate based on electric power supplied by the electrical power supply 113 and may have a speed (i.e., RPM) based on a condition of the control switch 112. The spindle 131 is configured to dispense one or more filaments to a length suitable for chopping (e.g., vegetation). In a possible implementation, the spindle 131 may be interchanged with a blade head that includes one or more blades for cutting.

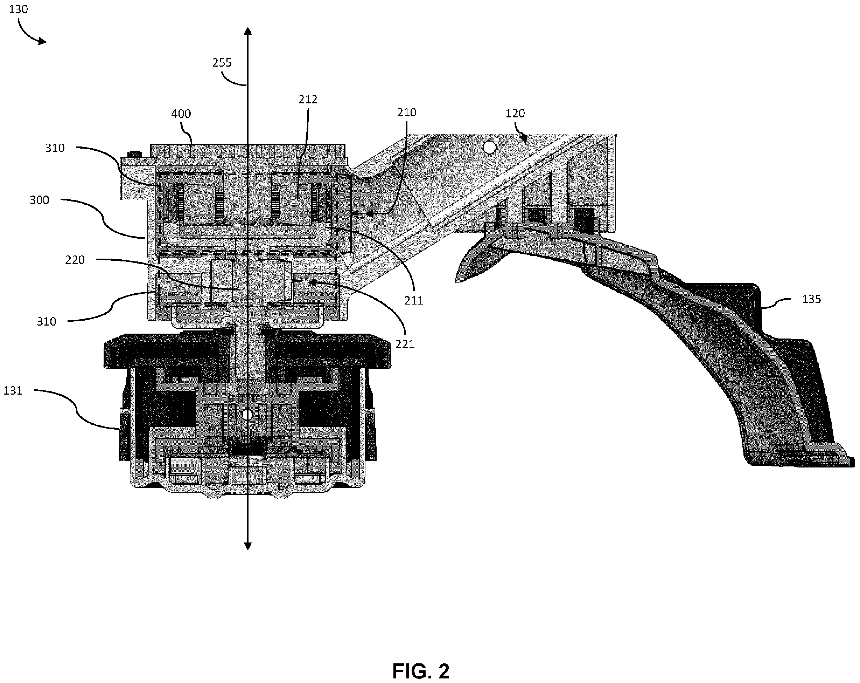

FIG. 2 is a side, cross-sectional view of a head portion 130 of the string trimmer 100. The head portion 130 includes a motor housing 300. The motor housing may be molded (e.g., injection molded), shaped (e.g., machined), or assembled to interface with different parts of the string trimmer 100. For example, the motor housing 300 is configured (i.e., shaped) to interface (i.e., connect, attach) with the boom portion 120. The motor housing 300 is further configured to interface with the shield 135. The motor housing 300 is further configured to interface with a heat sink 400.

The motor housing 300 is hollow. As shown in FIG. 2, an outer-rotor motor 210 is contained within an interior chamber 310 of the motor housing 300. The heat sink 400 can be attached (e.g., bolted, screwed, riveted) to the motor housing 300 and can form a wall of the interior chamber of the motor housing 300.

The outer-rotor motor 210 includes a rotor assembly 211 mechanically connected (e.g., affixed) to a shaft 220 so that movement of the rotor assembly 211 directly moves the shaft 220. The outer-rotor motor 210 further includes stator assembly 212. The stator assembly 212 remains in a fixed position while the rotor assembly may be configured to rotate about an axis 255. The axis 255 is aligned with a centerline (i.e., axis of symmetry) of the shaft 220.

The rotor assembly 211 includes a rotor core supporting a plurality of permanent magnets (i.e., magnetic poles, poles) arranged (e.g., equally spaced) around (i.e., along) a first perimeter (i.e., first circle) corresponding to (e.g., defined by) the rotor assembly 211. The stator assembly 212 of the outer-rotor motor 210 includes a stator core including a center bore and a plurality of stator teeth projecting radially outwardly from the center bore, and plurality of coils wound on the respective plurality of stator teeth. The stator core may be formed from a stack of steel laminations stamped to form the center bore and the plurality of teeth, where a suitable number of the steel laminations are bonded or interlocked together at a desired stack length. The outer surface of the plurality of stator teeth is arranged (e.g., equally spaced) around (e.g., along) a second perimeter (i.e., second circle) corresponding to (e.g., defined by) the stator assembly 212. There is a gap (air gap) between the rotor assembly 211 and the stator assembly 212. The gap may be uniform around the perimeter so that when the coils are energized they produce a rotating magnetic flux that interacts with the permanent magnets of the rotor assembly 211 to rotate the rotor assembly 211 relative to the stator assembly 212 (i.e., around the axis 255). The coils may be interconnected to form a plurality of phases of the motor, where each phase may include two or more coils connected together in a series and/or a parallel configuration. The phases may similarly be connected in a wye and/or a delta configuration. A power module (not shown) including an inverter circuit having a plurality of high-side and low-side power switches may be provided to supply electric power from the electrical power supply 113 to the coils to sequentially energize the phases of the motor. The current levels may be high so that heat is generated in the stator assembly 212 due to the ohmic losses of the coils. Excessive heat may cause damage or may interrupt operation (e.g., due to thermal expansion) of the string trimmer 100.

The rotor assembly 211 (i.e., first perimeter) and the stator assembly 212 (i.e., second perimeter) are concentric and centered at the axis 255. The rotor assembly 211 may be symmetric around the axis 255. Likewise, the stator assembly 212 may be symmetric around the axis 255.

The outer-rotor configuration of this disclosure supports a greater number of permanent magnets in relation to the stator assembly, leading to a higher magnetic flux interaction between the permanent magnets and the coils. This in turn leads to a higher torque output in comparison to an inner-rotor motor of a similar size. In an embodiment, the rotor assembly 211 may include fourteen permanent magnets (i.e., fourteen magnetic poles), and the stator assembly 212 may include twelve stator teeth supporting twelve stator coils connected in a three-phase configuration.

The shaft 220 may be coupled to the rotor assembly 211 at a center of the rotor assembly 211 so that it rotates about the axis 255 during operation. In the exemplary direct-drive configuration, there is no transmission (e.g., gear assembly) between the outer-rotor motor 210 and the shaft 220, because the high pole count of the outer-rotor motor 210 produces sufficient torque to drive the spindle 131 for a cutting operation without a gear reduction mechanism.

The rotor assembly 211 of the outer-rotor motor 210 is coupled to the spindle 131 via the shaft 220. A bearing-pair 221 includes a stack of two (identical) bearings. Each bearing of the bearing-pair 221 includes an inner race and an outer race separated by a set of balls. The shaft 220 may be mechanically supported and allowed to rotate (i.e., spin) by the bearing-pair 221. For example, the shaft 220 may be press-fit into the bearing-pair 221.

The motor housing 300 includes a bearing support structure 320 configured to support and position the bearing-pair 221 and shaft 220. For example, the bearing support structure may include a wall bordering the interior chamber of the motor housing 300 and an annular body formed therein around a center aperture (i.e., aperture 325) configured to securely received the outer races of the bearing-pair 221 .

A bearing-pair 221 may be fit (e.g., press-fit) within the annular body of the bearing support structure of the motor housing 300. The bearing-pair 221 is configured to support and position the shaft 220, which in turn positions the rotor assembly 211. For example, the bearing support structure may position/align the bearing-pair 221 and the bearing-pair 221 may position/align shaft 220. The shaft 220 may position/align the rotor assembly 211 so that as to maintain the air gap (e.g., symmetric gap, uniform gap) between the stator assembly 212 and the rotor assembly 211.

The stator assembly 212 may be positioned/aligned by the heat sink 400. For example, the center bore of the stator core of the stator assembly 212 may be coupled (e.g., press-fit) on a mounting post of the heat sink 400 so that its center is aligned with the shaft 220 (i.e., the axis 255).

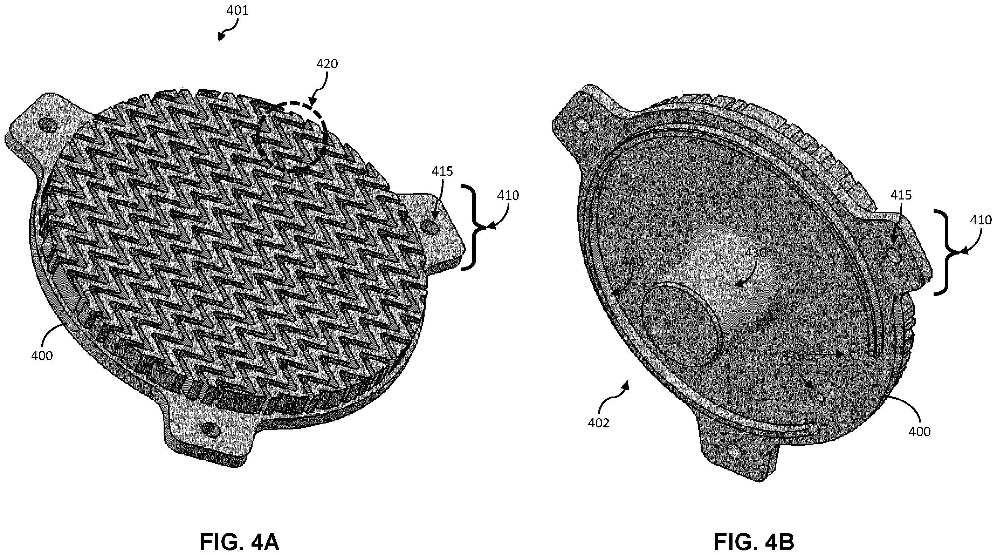

The heat sink 400 includes features to help with the alignment of the stator assembly 212 and sealing the motor housing 300. The features of the heat sink 400 are described in general here and then in more detail below in FIG. 4. For example, the heat sink 400 may include a raised ring that mates with an opening in the motor housing 300 to position the heat sink so that the mounting post is aligned with the axis 255. The raised ring may also create more contiguous surface area between the heat sink 400 and the motor housing 300, which can improve a seal between the two. For example, the raised ring may help prevent moisture or dust from reaching the outer-rotor motor 210.

While the motor housing 300 may be a material that is easy to mold (e.g., plastic), the heat sink 400 may be a material (e.g., aluminum) with a high thermal conductivity (e.g., > 100 W/m·K). The direct mechanical coupling (e.g., press-fit) between the stator assembly 212 and the heat sink 400 further enables the heat sink 400 to absorb any heat generated by the stator assembly 212. Specifically, as the stator bore of the stator core is securely coupled (e.g., press-fit) on a mounting post of the heat sink 400, it provides a direct and highly conductive thermal dissipation path from the stator coils to the heat sink 400. The mechanical connection between the stator assembly 212 and the heat sink 400, as well as the high thermal conductivity of the heat sink 400, may allow the heat sink 400 to cool the outer-rotor motor 210 without the need for a cooling fan to generate an air flow through the motor. Accordingly, the heat sink 400 may include no air intake and exhaust openings (e.g., holes, gaps, slots) for cooling. The heat sink 400 with no openings may prevent a change (e.g., loss) in cooling that can occur when the openings become clogged (e.g., with grass through use). The heat sink 400 with no openings may further help prevent any dust, debris, or moisture entering the interior chamber, which could affect the operation of the outer-rotor motor 210. As a result, the heat sink 400 with no openings may help to extend the operating life of the string trimmer 100 and/or enable the string trimmer 100 to operate in harsh (e.g., dirty, wet) environments.

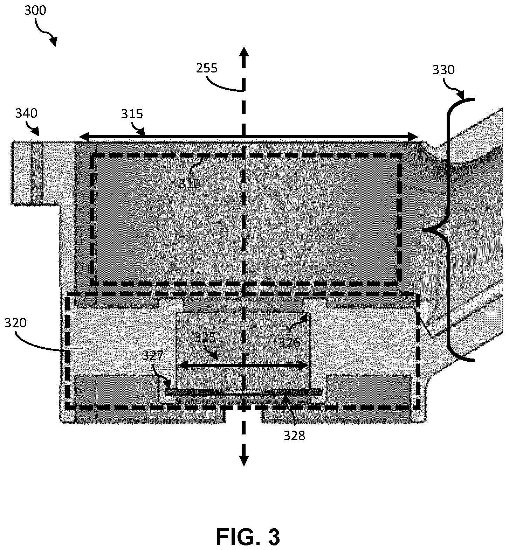

FIG. 3 is a side, cross-sectional view of a motor housing 300 according to a possible implementation of the present disclosure. The motor housing 300 includes an interior chamber 310 that is configured (e.g., sized) to contain the outer-rotor motor 210 (see FIG. 2). The motor housing 300 further includes an opening 315. The opening is sized to receive the motor therein during the assembly process, but it is (fully) covered by the heat sink 400 when the heat sink 400 is attached to the motor housing 300. Accordingly, the interior chamber 310 may be defined by the motor housing 300 and the heat sink 400. For the purposes of description, the opening 315 may be said to be at the top of the interior chamber 310.

The motor housing 300 further includes one or more (e.g., three) attachment features 340 to which the heat sink 400 may be mechanically coupled (e.g., bolted, screwed). The motor housing 300 further includes a boom receiver 330 configured to mate with the boom portion 120 of the string trimmer 100. For example, the boom portion 120 may be inserted into the boom receiver 330 and fastened (e.g., bolted, screwed) into place. For the purpose of description, the boom receiver 330 may be said to be at the back of the interior chamber 310.

The motor housing 300 may further include a partitioning wall defining the bearing support structure 320 previously discussed. The bearing support structure 320 includes an aperture 325 (e.g., cylindrical opening) configured to receive a pair of ball-bearings arranged in a contiguous stack (i.e., bearing-pair). The bearing support structure 320 may include an annular body projecting from the wall of the partitioning wall opposite the motor and formed around the aperture 325 to support the bearing-pair. The bearing support structure 320 may include a step 326 to retain the bearing-pair on a side of the bearing-pair facing the interior chamber 310. The bearing support structure 320 may further include a slot 327 in the annular body configured to position and support (i.e., hold) a retaining ring 328, which can retain the bearing-pair on a side opposite the step 326. For the purpose of description, the bearing support structure 320 may be said to be at the bottom of the interior chamber 310.

The bearing-pair includes a first ball-bearing and a second ball-bearing that have the same dimensions. For example, each ball-bearing may be an annular ring that has an inner diameter and an outer diameter. The first ball-bearing includes a first inner race, which defines a first inner diameter and an first outer race, which defines a first outer diameter. The second ball-bearing includes a second inner race, which defines a second inner diameter, and a second outer race, which defines a second outer diameter. The ball-bearings can be the same size so that the first inner diameter is equal to the second inner diameter and the first outer diameter is equal to the second outer diameter. The first outer diameter and the second outer diameter may be sized so that the sides of the ball-bearings are in contact with (i.e., flush) with sides of the aperture 325. The first inner diameter and the second inner diameter may be sized to allow the shaft 220 of FIG. 2 to be press-fit through the bearing-pair. In other words, the shaft 220 may extend through the first ball-bearing and the second ball-bearing so that a first side of the shaft 220 is inside the interior chamber 310 and a second side of the shaft is outside the motor housing 300 (i.e., in the environment) The dual bearings provides a two-point support of the shaft 220. The dual ball-bearings are both at the same side of the outer-rotor motor (i.e., output), which may make assembly and maintenance of the head portion 130 easier. This arrangement provides a cantilevered support structure for the rotor 211 relative to the motor housing 300 using stacked bearings located on one side of the motor. The bearings allow the shaft 220 to rotate around the axis 255 and may align a center-line of the shaft 220 with the axis 255 to which the stator assembly 212 is aligned. Because the shaft 220 is coupled to the rotor assembly, the bearing support structure 320 contributes to positioning the rotor assembly within the interior chamber 310. Accordingly the bearings may help position the rotor assembly 211 so that an air gap (i.e., uniform air gap) between the stator assembly 212 and the rotor assembly 211 is maintained.

The interior chamber 310 can be sealed from an environment (at the sides) by the motor housing 300. The interior chamber 310 can be further sealed at the top by the heat sink 400. The interior chamber 310 can be further sealed at the bottom by the bearing-pair and the shaft.

Sealing the interior chamber 310 may protect the outer-rotor motor 210 from environments with a high amount of dust, debris, and moisture (i.e., harsh environments), but the sealing can also limit cooling (i.e., radiative cooling) of the outer-rotor motor 210. Accordingly, the heat sink 400 attached at the top of the interior chamber 310 may be used to dissipate heat generated within the interior chamber 310 to the environment.

FIG. 4A is a perspective view of an exterior surface of a heat sink 400 according to a first possible implementation of the present disclosure. The heat sink 400 has a shallow, circular shape (i.e., plate-like shape). The exterior surface 401 of the heat sink 400 faces towards an environment when the heat sink 400 is attached to the motor housing 300. In other words, the exterior surface 401 is the side of the heat sink 400 that is opposite to the interior chamber 310 when the heat sink 400 is attached to the motor housing 300.

The exterior surface 401 of the heat sink 400 includes fins 420. The fins 420 may be formed (e.g., machined) into the heat sink 400 to increase a surface area of the exterior surface 401. The increased surface area may help to dissipate heat absorbed by the heat sink to the environment (i.e., outside the interior chamber). The fins 420 may have different shapes (width, height, direction) based on factors including (but not limited to) heat dissipation, expected use, ease of manufacture. While the present disclosure is not limited any particular size, shape, or number of fins 420, FIG. 4A illustrates fins 420 shaped to form a chevron pattern on the exterior surface 401 of the heat sink 400.

FIG. 4B is a perspective view of an interior surface 402 of a heat sink 400 according to the first possible implementation of the present disclosure. The interior surface 402 include a mounting post 430. The mounting post 430 may extend into the interior chamber 310 (FIG. 3) of the motor housing 300 when the heat sink 400 is attached. In other words, the interior surface 402 is configured to face the interior chamber 310. The mounting post 430 may be an attachment point for the stator assembly 212. For example, the mounting post 430 may include approximately the same diameter as a center opening defined by the center bore of the stator assembly 212, allowing the center bore of the stator assembly 212 to be securely mounted via, e.g., press-fitting on the mounting post 430 (i.e., stator pole) of the heat sink 400. In an embodiment, an axial length of the mounting post 430 may be greater than an axial length of the stator core, allowing the mounting post 430 to be fully received through the stator core, and the distal end of the mounting post 430 to be approximately planer with an end surface of the stator core. The stator assembly 212 may be press-fit to the mounting post 430 before attaching the heat sink 400 to the motor housing 300, allowing the stator assembly 212 to be located and maintained relative to the rotor assembly 211 once the heat sink 400 is secured to the motor housing 300.

The heat sink 400 includes a plurality of attachment points 410 that each correspond to an attachment feature 340 of the motor housing 300. Each attachment point 410 may include an opening 415 for a fastener (e.g., screw, bolt, etc.). While, the heat sink 400 includes no openings to the interior chamber 310 (FIG. 3) for dissipating heat, the heat sink 400 may include an opening 415 (or openings) for attaching the heat sink 400 to the motor housing 300. Accordingly, the heat sink 400 may further include features on an interior surface 402 to seal the interior chamber 310.

As shown in FIG. 4B, the interior surface 402 of the heat sink 400 further includes a raised ring 440. The raised ring 440 may be configured to mate with the opening 315 of the motor housing 300 (FIG. 3). For example, the raised ring 440 may be sized/shaped so that its outer-diameter fits within the inner-diameter of the opening 315. The mounting post 430 may be concentric with the raised ring 440. Accordingly, the raised ring 440 may help position the mounting post 430 within the interior chamber 310 (e.g., align with the axis 255).

As shown in FIG. 4B, the heat sink 400 can further include at least one anchor point 416 on the interior surface 402. The at least one anchor point 416 is configured to receive a fastener to attach and secure wiring from the electrical power supply 113 fed through the boom portion 120 to the stator assembly 212 of the outer-rotor motor 210. The raised ring 440 may be absent in an area around the at least one anchor point 416 to provide clearance for the wiring.

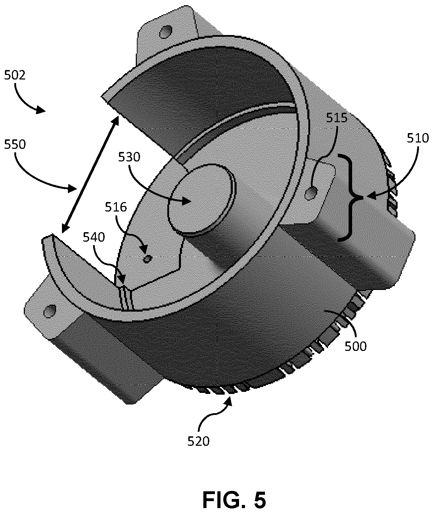

FIG. 5 is a perspective view of an interior side 502 of a heat sink 500 according to a second possible implementation of the present disclosure. The interior side 502 of the heat sink is opposite to the exterior side of the heat sink, which faces the environment when the heat sink is attached to the motor housing.

As shown in FIG. 5, the interior side 502 has a bottom and sidewalls, which form a concave shape (i.e. cup-like shape). The cup-like shape of the interior side 502 can partially define the interior chamber when the heat sink 500 is attached to the motor housing.

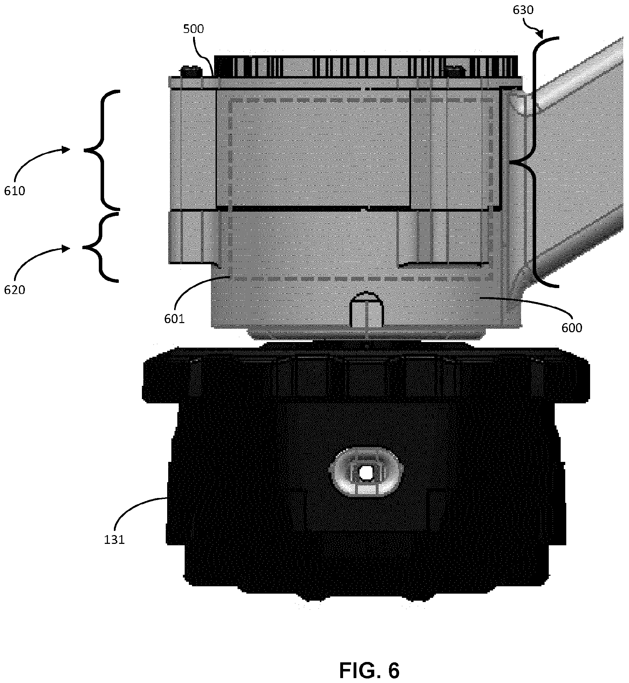

FIG. 6 is a side view of a head portion of a string trimmer according to a possible implementation of the present disclosure. As shown, the heat sink 500 is attached to the motor housing 600. The cup-like shape of the heat sink 500 can define a first portion 610 of the interior chamber 601 and the motor housing 600 can define a second portion 620 of the interior chamber 601. In other words, the concavity of interior side 502 of the heat sink may contain, at least a portion of, the outer-rotor motor.

The heat sink 500 is larger than the heat sink 400. As a result, the heat capacity of the heat sink 500 may be larger than the heat capacity of the heat sink 400. Accordingly, the heat sink 500 may be useful in applications that require more cooling (e.g., than can be provided by the heat sink 400).

Returning to FIG. 5, the heat sink 500 may include an opening 550 provide clearance for the boom receiver portion 630 of the motor housing 600. The interior side 502 of the heat sink 400 further includes a raised ring 540. The raised ring 540 may be configured to mate with an opening (i.e., top opening) of the motor housing 600. For example, the raised ring 540 may be sized/shaped so that it fits within a step in the walls of the motor housing. The raised ring 540 may also include an opening to adapt to the boom receiver portion 630 of the motor housing 600.

The interior side 502 of the heat sink 500 may further include a mounting post 530. The mounting post 530 may extend into the interior of the cup-like shape defined by the side walls of the heat sink 500. In other words, the interior side 502 includes a mounting post 530 that extends into the interior chamber defined (at least in part) by the heat sink 500. The mounting post 530 may be an attachment point for the stator assembly. For example, the stator assembly 212 may be press-fit to the mounting post 530 before attaching the heat sink 500 to the motor housing 600.

The heat sink 500 further includes at least one attachment point 510. Each attachment point 510 may include an opening 515 for a fastener (e.g., screw, bolt, etc.). The heat sink 500 has no openings to the interior of the cup-like shape for dissipating heat.

The exterior surface of the heat sink 500 includes fins 520. The fins 520 may be formed (e.g., machined) into the heat sink 500 to increase a surface area of the exterior surface. The increased surface area may help to dissipate heat absorbed by the heat sink 500 to the environment (i.e., outside the interior chamber). The fins 520 may have different shapes (width, height, direction) based on factors including (but not limited to) heat dissipation, expected use, ease of manufacture. While the present disclosure is not limited to any particular size, shape, or number of fins, the fins 520 may be shaped to form a chevron pattern, as shown in FIG. 4A.

As shown in FIG. 5, the heat sink 500 can further include at least one anchor point 516 on the interior side 502. The at least one anchor point 516 is configured to receive a fastener to attach and secure wiring from the electrical power supply 113 fed through the boom portion 120 to the stator assembly 212 of the outer-rotor motor 210. The opening 550 in the side walls of the heat sink 500 can provide clearance for the wiring.

The outer-rotor motor can include a rotor assembly configure to rotate relative to the stator assembly. As mentioned, the rotor assembly is configured to position/support (i.e., hold) a plurality of permanent magnets around a perimeter. The rotor assembly is further configured to hold a shaft at the center of the perimeter. For these functions, the rotor assembly can be implemented variously.

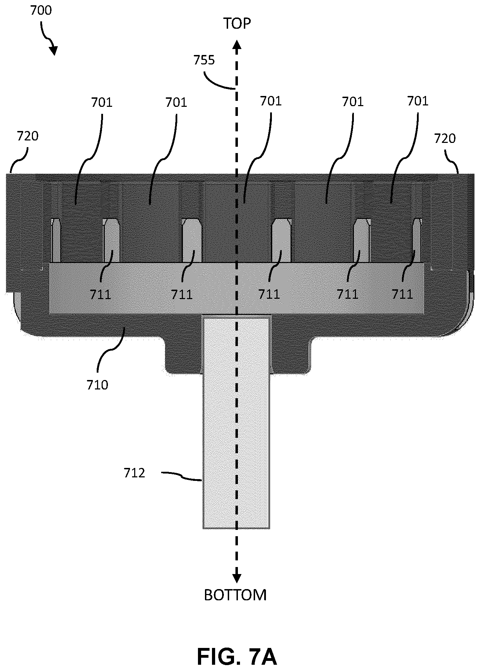

FIG. 7A is a perspective view of a rotor assembly 700 according to a first possible implementation of the present disclosure. The rotor assembly 700 includes a plurality of permanent magnets 701, which may have an equal size and shape. The rotor assembly 700 further includes a magnet base 710 configured to support and position the plurality of permanent magnets 701. In particular the magnet base 710 includes a plurality of teeth 711 configured to space the plurality of permanent magnets 701 (equally) around the rotor assembly 700. The rotor assembly 700 further includes an outer ring 720 that can mate with the magnet base 710 ((i.e. press-fit as shown) to hold the plurality of permanent magnets 701 in place (i.e., between the plurality of teeth 711). As shown in FIG. 7A, the outer ring 720 is a cylindrical body having an inner diameter sized to be fittingly mounted around the periphery of the magnet base 710. Additionally the outer ring 720 can have a height that is greater than the height of the magnets 701. The rotor assembly 700 further includes a shaft 712 that is mechanically coupled (e.g., press-fit) to the magnet base 710. The shaft 712 is cylindrical and defines a central axis 755 along its centerline, as shown. In operation, the plurality of permanent magnets 701 of the outer-rotor motor revolve around the central axis 755 to rotate the shaft 712 about the central axis 755. The combination of the outer ring 720 and the magnet base 710 form a rotor core. Accordingly, the rotor core for this implementation is a two-piece construction. Each piece may be made of a solid-core steel material.

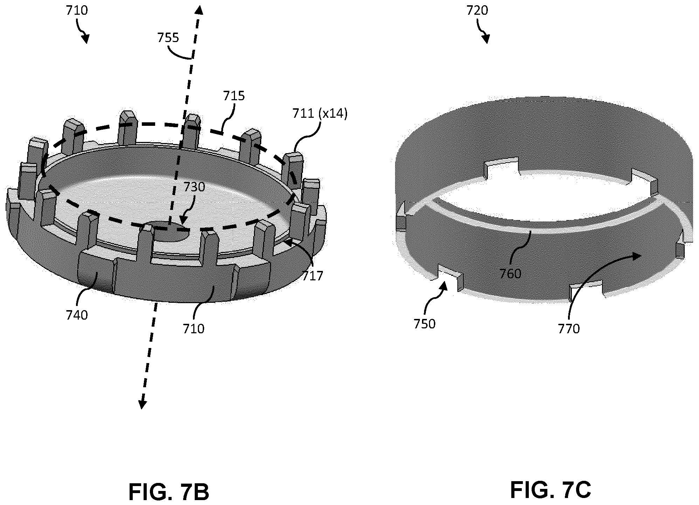

FIG. 7B is a perspective view of the magnet base 710 for the rotor assembly 700 of FIG. 7A. The magnet base 710 includes a generally planar disc-shaped base portion having a circular opening (i.e., through-hole, hole) that is concentric with a perimeter 715 of the magnet base 710. The shaft 712 may be press-fit into the opening 730.

The magnet base 710 includes a plurality of teeth 711, which can have the same shape (e.g., height, width, etc.) and can be spaced equally (i.e., evenly) around the perimeter 715 of the magnet base 710, as shown. While 14 teeth are shown in the implementation illustrated in FIG. 7B, the magnet base 710 may include any number of teeth to hold any number of permanent magnets in various implementations of the rotor assembly 700.

As shown in FIG. 7B, the plurality of teeth 711 extend from the base portion to a top portion in a direction aligned parallel to the central axis 755. The top portion of each of the plurality of teeth 711 may include chamfers so that the top portion of each of the teeth appears to be pointed. The pointed shape can make positioning the permanent magnets between adjacent teeth easier. Sides of each of the plurality of teeth may be wedged (i.e., at an angle) with a side surface of a permanent magnet so that when a permanent magnet is placed between an adjacent pair of teeth it is wedged in place. In other words, when a permanent magnet is pushed against the wedge surfaces of an adjacent pair of teeth in a direction towards the central axis 755, it is held in place by a mechanical holding force created by the wedge surfaces on each side, creating a peripheral boundary applying the mechanical holding force to the permanent magnet in a direction away from the center axis 755. The magnet base 710 further includes a step 717 around the perimeter 715 of the magnet base 710 to prevent the magnet from being pushed passed the teeth as it is pushed in a direction towards the central axis 755. The mechanical holding force (i.e., grip) of the wedge surfaces and the stopping force of the step 717 may be sufficient to hold the permanent magnets in place without an adhesive (e.g., glue). The plurality of permanent magnets may be pushed towards the central axis and held in place by the outer ring 720 of the rotor assembly 700.

FIG. 7C is a perspective view of the outer ring 720 for the rotor assembly 700 of FIG. 7A. The outer ring 720 is configured to mate with the magnet base 710 after the plurality of magnets 701 are disposed between the plurality of teeth 711. For example, the inner diameter of the outer ring 720 may fit around the plurality of permanent magnets 701 and over the magnet base 710.

The outer ring 720 includes a notch 750 (or notches) that is configure to receive (i.e., mate with) a raised latch 740 (or raised latches) when the outer ring 720 is mechanically coupled (i.e. slip-fit or press-fit) to the magnet base 710. When mated (i.e., coupled, engaged), the raised latch 740 (or latches) and the notch 750 (or notches) can prevent the outer ring and the magnet base 710 from rotating (i.e., slipping) relative to each other. For example, the notch 750 and raised latch 740 can hold the magnet base 710 and the outer ring 720 in place so that a torque on the magnet base 710 in a direction around the central axis 755 does not cause the outer ring 720 to slip in its position relative to the magnet base 710.

The outer ring 720 further includes a retaining ledge 760 (e.g. step) around the perimeter of the outer ring 720, as shown in FIG. 7C. The retaining ledge 760 may engage with (e.g., touch, press) a top surface of each of the plurality of permanent magnets when the outer ring 720 is mated with the magnet base 710. Further, an inner surface 770 at the inner diameter of the outer ring 720 may engage with the outer surfaces of the plurality of permanent magnets. Accordingly, when the outer ring 720 is installed, the plurality of permanent magnets may be held by the retaining ledge 760 and the retaining ledge 760 of the outer ring 720 and by the plurality of teeth 711 (i.e., wedge surfaces) and the step 717 of the magnet base 710.

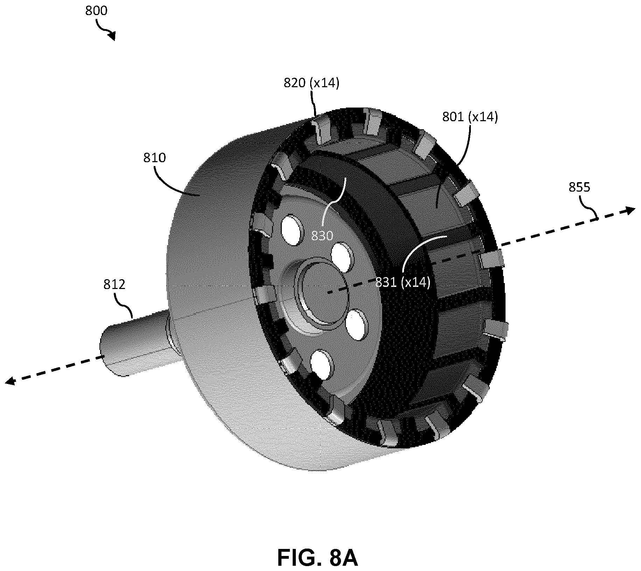

FIG. 8A is a perspective view of a rotor assembly 800 according to a second possible implementation of the present disclosure. The rotor assembly 800 includes a plurality of permanent magnets (i.e. magnets 801) arranged around a perimeter (e.g., inner diameter) of a magnet base 810. The magnets 801 are spaced equally by a plurality of ribs (i.e., ribs 811) of a molded insert 830. The magnet base includes a plurality of tabs (i.e., tabs 820) that are folded over each of the magnets 801 (e.g., one tab per magnet). When folded (i.e., bent), the tabs 820 hold (i.e., position, support, press) each of the magnets between adjacent flexible ribs.

In an embodiment, the ribs 811 can be made from an elastic material so that adjacent flexible ribs may be defined (e.g., crushed) by a magnet. Adjacent flexible ribs squeeze a magnet from each side to help hold the magnet in place. In other words, a magnet positioned between adjacent ribs of the flexible insert may deform a flexible rib on each side. In response to the deformation, the flexible ribs 811 (e.g., crushable ribs, elastic ribs) may exert forces on the magnet to resist the deformation. The forces can squeeze the magnet on its sides adjacent to the ribs to hold the magnet in place without adhesive (e.g., glue). A central axis 855 intersects a center of a perimeter of the magnet base 810, and the magnets 801 may revolve around the central axis 855 in operation. Alternatively, the ribs 811 may be made of rigid plastic or other resin material formed to rigidly retain the magnets, similarly to teeth 711 discussed above.

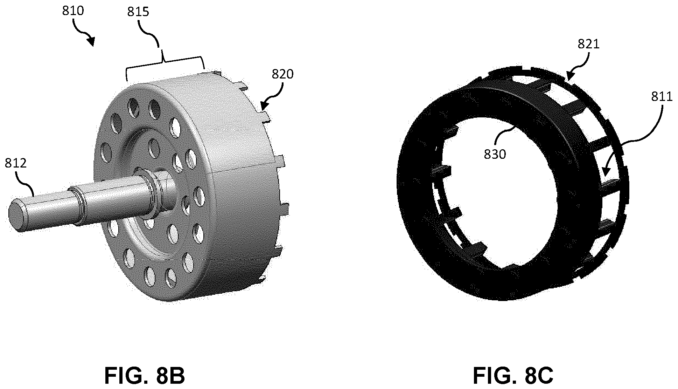

FIG. 8B is a perspective view of the magnet base 810 for the rotor assembly of FIG. 8A. The magnet base 810 has a cup-like shape which includes an interior (i.e., concavity) defined by a bottom portion that (at least) partially encloses one end of a cylindrical side portion 815. The magnet base 810 may be a non-ferrous metal, such as aluminum and the cylindrical side portion 815 includes a plurality of tabs 820 that can be bent towards the interior of the cup-like shape. A shaft 812 can be coupled (e.g., welded) to an opening in the magnet base 810 at the center of the perimeter (e.g., inner diameter) of the cylindrical side portion 815

FIG. 8C is a perspective view of a molded insert 830 for the rotor assembly 800 of FIG. 8A. The molded insert 830 can be built from a deformable and/or rigid material (e.g., plastic, resin). The molded insert 830 may be positioned inside the magnet base 810. The molded insert 830 forms the ribs 811 that partially define openings. The openings are sized and shaped to hold the magnets of the rotor assembly 800.

Building a rotor assembly 800 may include mounting (i.e., positioning) the magnets 801 on the inner surface of the magnet base 810, forming the molded insert 830 via an over-molding or insert-molding process to form the ribs 831 between the respective magnets radially and rotationally secure the magnets on the inner surface of the magnet base 810, and folding the tabs 820 over each of the magnets 801 to provide axial retention for the magnets in place mechanically without the need for adhesives (e.g., glue).

The molded insert 830 may further include at least one torque retaining feature 821. The torque retaining feature 821 is configured to mate (i.e., fit) with the magnet base 810. For example, the torque retaining features can be notches in the molded insert 830 into which tabs 820 of the magnet base 810 are fit when the molded insert 830 is inserted into the magnet base 810. The torque retaining features can prevent the molded insert 830 from slipping (i.e. moving relative to the magnet base 810) when torque is applied to the magnet base.

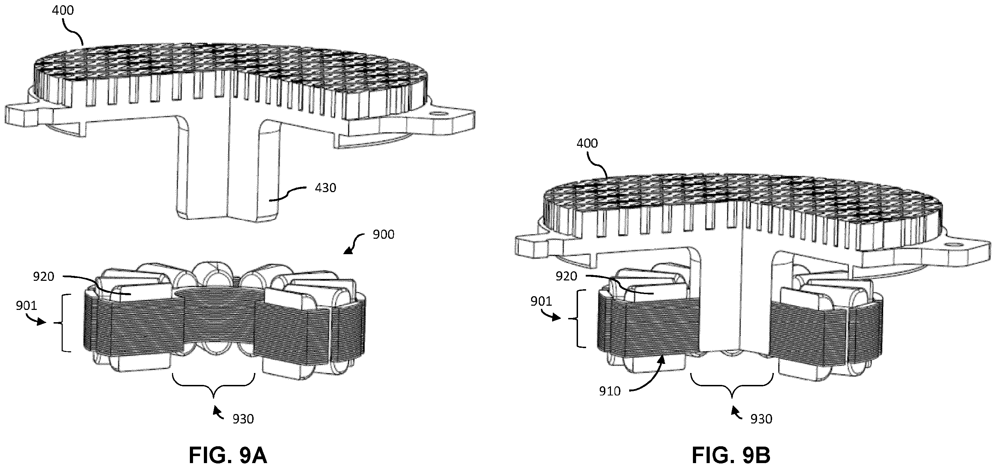

FIG. 9A is a perspective cutaway view illustrating a stator assembly 900 before being mechanically coupled (e.g., press fit) to a mounting post 430 of a heat sink 400 according a possible implementation of the present disclosure. The stator assembly 900 includes a plurality of electromagnets configured to provide a changing magnetic flux to interact with the permanent magnets of the rotor assembly 700. The interaction creates a torque to turn the shaft 712 of the rotor assembly 700.

The stator assembly 900 includes a stator core 901 and a plurality of stator windings. The stator core 901 is a ferrous metal and is fabricated as a stack of layers that are laminated together to define a height of the stator core 901. The laminated layers are configured to reduce eddy currents generated by the electromagnets in the ferrous metal.

The stator core includes a plurality of stator teeth that can be equally spaced around the center bore and that are directed radially outward from the center bore. From a top view, the stator has the appearance of a gear with a plurality of teeth positioned (e.g., equally spaced) around a central opening (i.e., center bore 930). Each of the plurality of stator windings includes an electrical wire wrapped around a respective stator tooth 910 to form an inductive coil. Each stator winding 920 is electrically energized by (i.e., conducts a current from) a power supply (e.g., battery pack) to generate a magnetic field. The magnetic field generated by each stator winding (i.e., coil) corresponds to a winding count (i.e., number of turns) of the coil and winding direction which of the coil.

FIG. 9B is a perspective cutaway view illustrating a stator core after being mechanically coupled to a mounting post of a heat sink according a possible implementation of the present disclosure. As shown, the opening is configured to receive the mounting post 430 in a press-fit coupling.

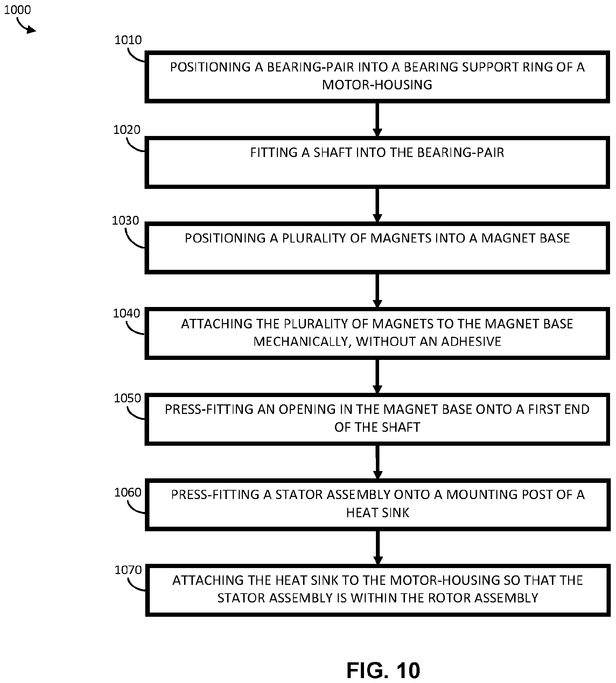

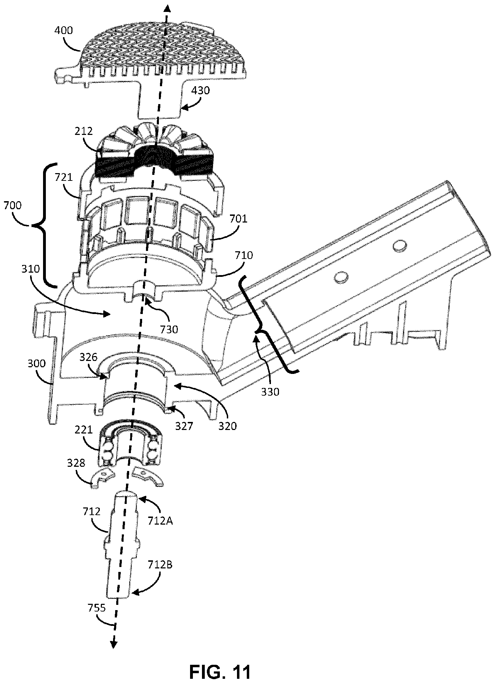

FIG. 10 is a flowchart of a method for assembling a string trimmer according to a possible implementation of the present disclosure. The method can be visualized for better understanding based on FIG. 11, which is an exploded, perspective view of a string trimmer according to a possible implementation of the present disclosure.

The method 1000 includes positioning 1010 a bearing-pair 221 into a bearing support structure 320 of a motor housing 300. For example, the bearing-pair 221 may be press-fit into an opening of the bearing support structure 320. Positioning 1010 the bearing-pair 221 may be limited by a step 326 at a side of the opening facing the interior chamber 310, and positioning the bearing-pair 221 may include installing a retaining ring 328 in a slot 327 at a side of the opening opposite to the interior chamber (i.e., output side).

The method 1000 further includes fitting 1020 a shaft 712 into the bearing-pair 221 (i.e., into the output side). In a possible implementation, the fitting is a press-fit of the shaft 712 into the bearing-pair 221. After press-fitting, the shaft 712 may be aligned with a central axis 755. In other words, the bearing support structure 320 aligns the bearing-pair 221 with the central axis 755, and the bearing-pair 221 aligns the shaft 712 with the central axis 755. After press-fitting a first end 712A (i.e., input end) of the shaft 712 may be inside the motor housing 300 (i.e., in the interior chamber 310), while a second end 712B (i.e., output end) of the shaft 712 may be outside the motor housing 300.

The method 1000 includes positioning 1030 (i.e., inserting, installing) a plurality of permanent magnets 701 into a magnet base 710. For example, the plurality of permanent magnets 701 may be inserted between the teeth of the magnet base 710 so that each permanent magnet is between an adjacent pair of teeth. The magnet base may space the plurality of permanent magnets 701 evenly around a perimeter centered on the central axis 755.

The method 1000 includes attaching 1040 the plurality of permanent magnets to the magnet base mechanically, without an adhesive (i.e., without glue). For example, an outer ring 721 may be mated (e.g., attached by pressing over) the magnet base 710 and the plurality of permanent magnets 701. The outer ring 721 can push (i.e., press) the plurality of magnets 701 against wedge surfaces of the teeth to hold the plurality of magnets in the magnet base 710.

The method 1000 includes press-fitting 1050 the magnet base 710 (i.e., an opening of the magnet base) onto a first end 712A of the shaft 712. In other words, the first end 712A of the shaft 712 is press-fit into an opening of the magnet base 710. After press-fitting, the rotor assembly 700 is positioned in the interior chamber 310 and can revolve around the central axis 755 due to the action (i.e., movement) of the bearing-pair 221.

The method 1000 includes press-fitting 1060 a stator assembly 212 onto a mounting post 430 of the heat sink 400, and attaching 1070 (e.g., fastening) the heat sink 400 to the motor housing 300. After attaching 1070, a center of the stator assembly 212 may be aligned with the central axis 755. In other words, the motor housing 300 aligns the mounting post 430 with the central axis 755, and the mounting post 430 aligns the stator assembly 212 with the central axis 755. The stator assembly 212 and the rotor assembly 700 are both aligned with (i.e., centered on) the central axis 755. This alignment to the central axis 755 further aligns the rotor assembly 700 and the stator assembly 212 relative to each other. The relative alignment provides a uniform gap between coils of the stator assembly 212 and the plurality of permanent magnets 701 around a perimeter (i.e., circumference) of the stator assembly 212.

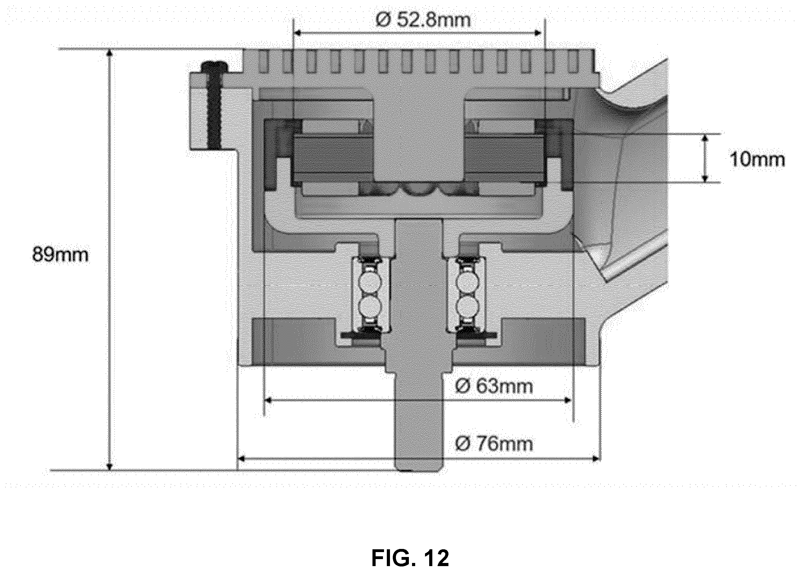

FIG. 12 is a side cross-sectional view of a head portion of a string trimmer illustrating dimensions of an outer-rotor motor according to a possible implementation of the present disclosure. As shown, the height from a distal end of a the shaft 712 to a exterior surface 401 of a heat sink 400 can be less than 100 millimeters (e.g., 89 mm). An outer diameter of the motor housing 300 can be less than 100 mm (e.g., 76 mm). The height the stator can be less than 20mm (e.g., 10 mm), while the outer diameter of the stator can be less than 75mm (e.g., 52.8 mm). The outer diameter of the outer-rotor motor can be less than 100 mm (e.g., 76 mm).

The outer-rotor motor can generate a power and a torque that can eliminate the need for a gear reduction mechanism in a string trimmer. For example, using the outer-rotor motor can eliminate a transmission including gears, shafts, bearings, etc. between the shaft 220 and the spindle 131 of the string trimmer 100. This may lead to improved performance as there cab be a power loss caused by the transmission. The improved efficiency provided by directly driving the shaft of a spindle can have the technical effect of extending an operating life of a string trimmer and can extend periods of use between charging a battery pack. Additionally the weight added by a transmission can be eliminated.

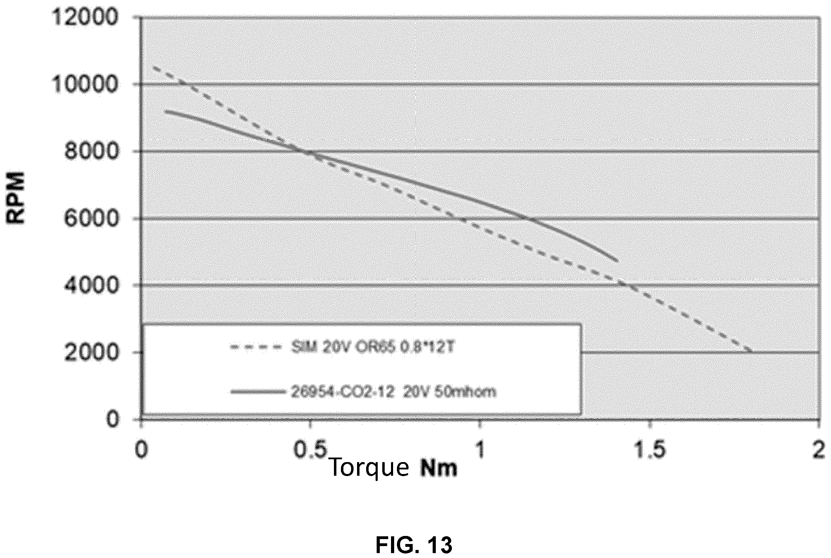

FIG. 13 is a graph illustrating speed versus torque of an outer-rotor motor according to a possible implementation of the present disclosure. The graph includes two curves relating torque (Nm) to speed (RPM). As shown, the outer-rotor motor can provide a torque in a range between 0.4 to 0.7 newton-meters (Nm) for a speed of 6500 revolutions per minute (RPM). A first curve (dotted) includes simulated values of torque for different revolutions per minute (RPM) and a second curve (solid) includes measured values of torque for different revolutions per minute (RPM). The measurements were taken using 20V DC power supply, which in this case was a 20Volt (V), 5 Amp-hours (Ah) power tool battery pack. From this graph it can be concluded the motor generates sufficient torque at a speed suitable for cutting vegetation.

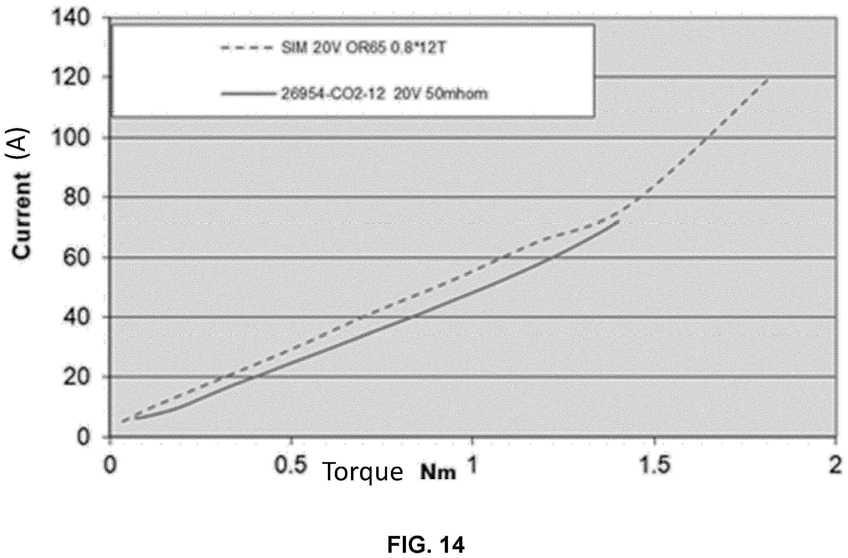

FIG. 14 is a graph illustrating current versus torque for an outer-rotor motor according to a possible implementation of the present disclosure. The graph includes two curves relating torque (Nm) to current (A). As shown, the outer-rotor motor can provide a torque in a range between 0.4 to 0.7 Nm for a current in a range between 20 and 40 Amps (A). A first curve (dotted) includes simulated values of torque for different motor currents and a second curve (solid) includes measured values of torque for different motor currents. The measurements were taken using 20V DC power supply, which in this case was a 20V, 5 Ah power tool battery pack. From this graph it can be concluded the motor generates sufficient torque at a current suitable for a power supply (e.g., battery pack) of a string trimmer.

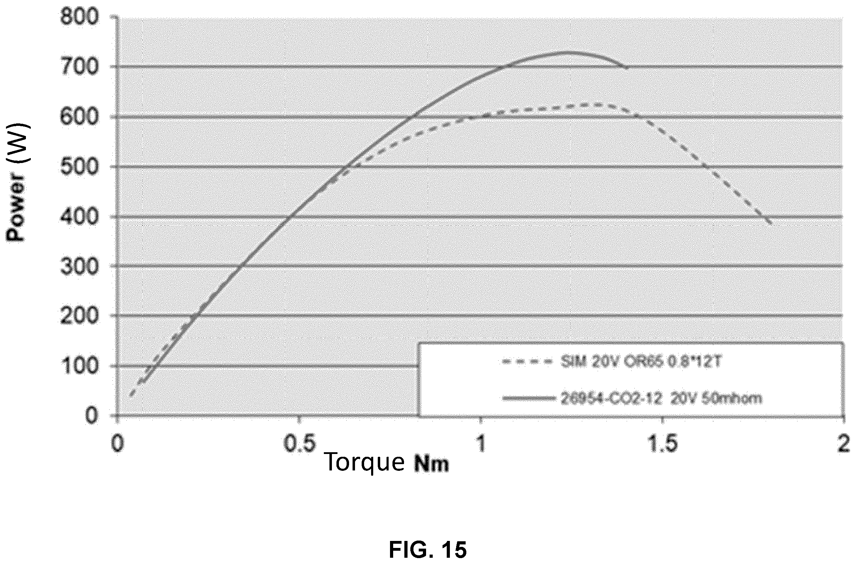

FIG. 15 is a graph illustrating power verses torque for an outer-rotor motor according to a possible implementation of the present disclosure. The graph includes two curves relating torque (Nm) to power (W). As shown, the outer-rotor motor can provide a torque in a range between 0.4 to 0.7 newton-meters (Nm) for a continuous power of 500 watts (W). A first curve (dotted) includes simulated values of torque for different revolutions per minute (RPM) and a second curve (solid) includes measured values of torque for different revolutions per minute (RPM). The measurements were taken using 20V DC power supply, which in this case was a 20Volt (V), 5 Amp-hours (Ah) power tool battery pack. From this graph it can be concluded the motor generates sufficient torque at a power suitable for a power supply (e.g., battery pack) of a string trimmer.

In the following some examples of the disclosure are described.

Example 1. A string trimmer comprising: an outer-rotor motor including a rotor assembly configured to rotate relative to a stator assembly, the rotor assembly coupled to a shaft; a motor housing including: an interior chamber configured to contain the outer-rotor motor; and a bearing support structure configured to support and position a bearing-pair, the bearing-pair supporting the shaft of the outer-rotor motor so that the rotor assembly is positioned inside the interior chamber; and a heat sink attached to the motor housing, the heat sink configured to: support and position the stator assembly inside the interior chamber and within the rotor assembly; absorb heat generated by the stator assembly; and seal the interior chamber to protect the outer-rotor motor.

Example 2. The string trimmer according to example 1, wherein the heat sink has a plate-like shape that includes an interior surface and an exterior surface, the exterior surface opposite to the interior surface.

Example 3. The string trimmer according to example 2, wherein the interior surface includes: a raised ring that mates with an opening in the motor housing to position the heat sink and seal the interior chamber when the heat sink is attached to the motor housing; and a mounting post extending into the interior chamber of the motor housing when the heat sink is attached to the motor housing.

Example 4. The string trimmer according to example 3, wherein the mounting post of the heat sink and the stator assembly of the outer-rotor motor are press-fit together.

Example 5. The string trimmer according to example 2, wherein the exterior surface includes: fins configured to dissipate the heat absorbed by the heat sink to an environment, the environment being outside the interior chamber; and no openings to the interior chamber.

Example 6. The string trimmer according to example 1, wherein the heat sink has a cup-like shape that includes an interior side and an exterior side, wherein: the interior side partially defines the interior chamber when the heat sink is attached to the motor housing; and the exterior side faces an environment when the heat sink is attached to the motor housing, the environment being outside the interior chamber.

Example 7. The string trimmer according to example 6, wherein: the interior side includes a mounting post; and the mounting post of the heat sink and the stator assembly of the outer-rotor motor are press-fit together.

Example 8. The string trimmer according to example 7, wherein the exterior side includes: fins configured to dissipate the heat absorbed by the heat sink to the environment; and no openings to the interior chamber.

Example 9. The string trimmer according to example 1, wherein the bearing-pair includes: a first ball-bearing including a first inner diameter and a first outer diameter; and a second ball-bearing including a second inner diameter and a second outer diameter, wherein the first inner diameter is equal to the second inner diameter and the first outer diameter is equal to the second outer diameter.

Example 10. The string trimmer according to example 9, wherein: the first ball-bearing and the second ball-bearing are arranged in a contiguous stack with the first outer diameter of the first ball-bearing and the second outer diameter of the second ball-bearing being in contact with the bearing support structure of the motor housing; and the shaft extends through the first inner diameter of the first ball-bearing and the second inner diameter of the second ball-bearing.

Example 11. The string trimmer according to example 1, wherein the rotor assembly includes: a plurality of permanent magnets; a magnet base including teeth configured to space the plurality of permanent magnets equally around a perimeter of the magnet base, the teeth including wedge surfaces facing the plurality of permanent magnets; and an outer ring configured to mate with the magnet base, wherein: the plurality of permanent magnets are pushed against the wedge surfaces of the teeth by the outer ring to hold the plurality of permanent magnets in place when the outer ring is mated with the magnet base.

Example 12. The string trimmer according to example 11, wherein the plurality of permanent magnets are held without an adhesive.

Example 13. The string trimmer according to example 11, wherein the magnet base further includes a step and the plurality of permanent magnets are pushed against the step by the outer ring when the outer ring is mated with the magnet base.

Example 14. The string trimmer according to example 11, wherein the magnet base includes raised latches that mate with notches in the outer ring to prevent the outer ring from rotating when the outer ring is mated with the magnet base.

Example 15. The string trimmer according to example 1, wherein the rotor assembly includes: a plurality of permanent magnets; a molded insert including: a plurality of flexible ribs spaced equally around a perimeter of the molded insert and configured to hold the plurality of permanent magnets; and a magnet base including: a cup-like shape configured to receive the molded insert; and a plurality of tabs configured to be folded over each of the plurality of permanent magnets to hold each of the plurality of permanent magnets in the magnet base and in between adjacent flexible ribs of the molded insert.

Example 16. The string trimmer according to example 15, wherein the molded insert includes a plurality of torque retaining features configured to mate with the magnet base to prevent the molded insert from slipping when torque is applied to the magnet base.

Example 17. The string trimmer according to example 1, wherein the motor housing further defines a boom receiver, the boom receiver configured to: mate with a boom section of the string trimmer; and contain electrical wiring from an electrical power supply of the string trimmer.

Example 18. The string trimmer according to example 17, wherein the electrical power supply includes a battery pack, the battery pack electrically coupled to the stator assembly by the electrical wiring.

Example 19. The string trimmer according to example 1, wherein the stator assembly includes: a stator core that includes a plurality of stator teeth that are equally spaced around a center bore and that are directed radially outward from the center bore; a plurality of stator windings, each stator winding including an electrical wire wrapped around a respective stator tooth and configured to be electrically energized by a power supply to generate a magnetic field.

Example 20. The string trimmer according to example 19, wherein the center bore is press-fit to a mounting post of the heat sink.

Example 21. The string trimmer according to example 19, wherein the stator core includes a plurality of laminated layers of a ferrous metal.

Example 22. A method for assembling a string trimmer, the method including: positioning a bearing-pair into a bearing support structure of a motor housing; fitting a shaft into the bearing-pair so that a first end of the shaft is in an interior chamber defined by the motor housing; building a rotor assembly by: positioning a plurality of permanent magnets into a magnet base; attaching the plurality of permanent magnets to the magnet base mechanically without an adhesive; and press-fitting an opening in the magnet base onto the first end of the shaft; press-fitting a stator assembly onto a mounting post of a heat sink; and attaching the heat sink to the motor housing so that the stator assembly is within the rotor assembly.

Example 23. The method according to example 22, wherein attaching the plurality of permanent magnets to the magnet base includes: positioning the plurality of permanent magnets between teeth of the magnet base, the teeth spaced equally around a perimeter of the magnet base; and mating an outer ring with the magnet base to push the plurality of permanent magnets against wedge surfaces of the teeth to hold the plurality of permanent magnets in the magnet base.

Example 24. The method according to example 22, wherein attaching the plurality of permanent magnets to the magnet base includes: positioning a molded insert inside the magnet base, the molded insert including flexible ribs spaced equally around a perimeter of the magnet base; positioning the plurality of permanent magnets between the flexible ribs of the molded insert; and folding a plurality of tabs of the magnet base over each of the plurality of permanent magnets to hold each of the plurality of permanent magnets in between adjacent flexible ribs of the molded insert.

Example 25. An outer-rotor motor for a string trimmer, comprising: a rotor assembly configured to rotate relative to a stator assembly, the rotor assembly coupled to a shaft; a motor housing defining: an interior chamber configured to contain the outer-rotor motor; and a bearing support structure configured to support and position a bearing-pair, the bearing-pair supporting the shaft of the outer-rotor motor so that the rotor assembly is positioned inside the interior chamber; and a heat sink attached to the motor housing, the heat sink configured to: support and position the stator assembly inside the interior chamber and within the rotor assembly; absorb heat generated by the stator assembly; and seal the interior chamber to protect the outer-rotor motor.

Example 26. The outer-rotor motor for the string trimmer according to example 25, wherein the rotor assembly includes: a plurality of permanent magnets; a magnet base including a plurality of teeth configured to space the plurality of permanent magnets equally around a perimeter of the magnet base, the plurality of teeth including wedge surfaces facing the plurality of permanent magnets; and an outer ring configured to mate with the magnet base, wherein: the plurality of permanent magnets are pushed against the wedge surfaces of the plurality of teeth by the outer ring to hold the plurality of permanent magnets in place without an adhesive when the outer ring is mated with the magnet base.

Example 27. The outer-rotor motor for the string trimmer according to example 25, wherein the rotor assembly includes: a plurality of permanent magnets; a molded insert including: a plurality of flexible ribs spaced equally around a perimeter of the molded insert and configured to hold the plurality of permanent magnets; and a magnet base including: a cup-like shape configured to receive the molded insert; and a plurality of tabs configured to be folded over each of the plurality of permanent magnets to hold the plurality of permanent magnets in the magnet base and in between flexible ribs of the molded insert.

A number of embodiments have been described. Nevertheless, it will be understood that various modifications may be made without departing from the spirit and scope of the specification. For example, the string trimmer described here is just one possible electric outdoor apparatus that could include an outer-roto motor. Other electric outdoor apparatus may face the same, or similar, technical problems as the string trimmer. Thus, the same, or similar, technical solutions described here may be applied and realized in these other outdoor apparatus.

In addition, any logic flows depicted in the figures do not require the particular order shown, or sequential order, to achieve desirable results. In addition, other steps may be provided, or steps may be eliminated, from the described flows, and other components may be added to, or removed from, the described systems. Accordingly, other embodiments are within the scope of the following claims.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Terms of degree such as "generally," "substantially," "approximately," and "about" may be used herein when describing the relative positions, sizes, dimensions, or values of various elements, components, regions, layers and/or sections. These terms mean that such relative positions, sizes, dimensions, or values are within the defined range or comparison (e.g., equal or close to equal) with sufficient precision as would be understood by one of ordinary skill in the art in the context of the various elements, components, regions, layers and/or sections being described.

While certain features of the described implementations have been illustrated as described herein, many modifications, substitutions, changes and equivalents will now occur to those skilled in the art. It is, therefore, to be understood that the appended claims are intended to cover all such modifications and changes as fall within the scope of the implementations. It should be understood that they have been presented by way of example only, not limitation, and various changes in form and details may be made. Any portion of the apparatus and/or methods described herein may be combined in any combination, except mutually exclusive combinations. The implementations described herein can include various combinations and/or sub-combinations of the functions, components and/or features of the different implementations described.

## Claims

1. A tool comprising:
an outer-rotor motor including a rotor assembly configured to rotate relative to a stator assembly, the rotor assembly coupled to a shaft;
a motor housing including: a cylindrical body forming an interior chamber configured to contain the outer-rotor motor and having an open end; and a bearing support structure extending inwardly from the cylindrical body to form a bearing pocket configured to support and position a bearing-pair, the bearing-pair being mounted on the shaft of the outer-rotor motor so that the rotor assembly is positioned inside the interior chamber; and
a heat sink attached to the open end of the motor housing opposite the bearing support structure, the heat sink configured to support and position the stator assembly inside the interior chamber and within the rotor assembly and substantially absorb heat generated by the stator assembly.

2. The tool of claim 1, wherein the heat sink has a plate-like shape that includes an interior surface and an exterior surface, the exterior surface opposite to the interior surface.

3. The tool of claim 2, wherein the interior surface includes:
a raised ring that mates with an opening in the motor housing to position the heat sink and seal the interior chamber when the heat sink is attached to the motor housing; and
a mounting post extending into the interior chamber of the motor housing when the heat sink is attached to the motor housing.

4. The tool of claim 3, wherein a center bore of the stator assembly is press-fit onto the mounting post of the heat sink.

5. The tool of any of claims 2 to 4, wherein the exterior surface includes: fins configured to dissipate the heat absorbed by the heat sink to an environment, the environment being outside the interior chamber; and no openings to the interior chamber.

6. The tool of any preceding claim, wherein the bearing-pair includes:
a first ball-bearing including a first inner diameter and a first outer diameter; and
a second ball-bearing including a second inner diameter and a second outer diameter, wherein the first inner diameter is equal to the second inner diameter and the first outer diameter is equal to the second outer diameter.

7. The tool of claim 6, wherein:
the first ball-bearing and the second ball-bearing are arranged in a contiguous stack with the first outer diameter of the first ball-bearing and the second outer diameter of the second ball-bearing being in contact with the bearing support structure of the motor housing; and
the shaft extends through the first inner diameter of the first ball-bearing and the second inner diameter of the second ball-bearing.

8. The tool of any preceding claim, wherein the rotor assembly includes:
a plurality of permanent magnets;
a magnet base including teeth configured to space the plurality of permanent magnets equally around a perimeter of the magnet base, the teeth including wedge surfaces facing the plurality of permanent magnets; and
an outer ring configured to mate with the magnet base,
wherein the plurality of permanent magnets are pushed against the wedge surfaces of the teeth by the outer ring to hold the plurality of permanent magnets in place when the outer ring is mated with the magnet base.

9. The tool of claim 8, wherein the magnet base further includes a step and the plurality of permanent magnets is pushed against the step by the outer ring when the outer ring is mated with the magnet base.

10. The tool of any of claims 1 to 7, wherein the rotor assembly includes:
a plurality of permanent magnets;
a molded insert including a plurality of flexible ribs spaced equally around a perimeter of the molded insert and configured to hold the plurality of permanent magnets; and
a magnet base including:
a cup-like shape configured to receive the molded insert; and
a plurality of tabs configured to be folded over each of the plurality of permanent magnets to hold each of the plurality of permanent magnets in the magnet base and in between adjacent flexible ribs of the molded insert.

11. The tool of any preceding claim, wherein the tool is a string trimmer, the tool further comprises a boom receiver, and the motor housing further defines an opening formed between the interior chamber and the boom receiver, the boom receiver configured to mate with a boom section of the string trimmer and contain electrical wiring from an electrical power supply.

12. The tool of any preceding claim, wherein the stator assembly includes:
a stator core that includes a plurality of stator teeth that are equally spaced around a center bore and that are directed radially outward from the center bore; and
a plurality of stator windings, each stator winding including an electrical wire wrapped around a respective stator tooth and configured to be electrically energized by a power supply to generate a magnetic field,
wherein the center bore is press-fit to a mounting post of the heat sink.
